# EUROPEAN PATENT APPLICATION

(11) **EP 4 752 183 A1**
(43) Date of publication of application: **03.06.2026**
(21) Application number: 24307001.8
(22) Date of filing: 29.11.2024
(51) Int. Cl.: C09J 7/38, C09J 153/02, C08L 91/00, C08L 57/02

(54) **HOT MELT PRESSURE SENSITIVE ADHESIVE COMPOSITION**

(71) Applicant: Bostik SA, 92800 Puteaux (FR)
(72) Inventor: ZENG, Di, SHANGHAI (CN); LI, Danfeng, SHANGHAI (CN)
(74) Representative: Arkema Patent

(57) **Abstract**

The invention relates to a hot melt pressure sensitive adhesive composition comprising:
- at least one styrene block copolymer,
- at least one tackifying resin, and
- a plasticizer comprising at least one alkylated naphthalene.

Furthermore, the invention relates to an article comprising the hot melt pressure sensitive adhesive composition according to the invention.

Finally, the invention relates to the use of the hot melt pressure sensitive adhesive composition according to the invention.

## Description

### TECHNICAL FIELD

The present invention relates to a hot-melt pressure sensitive adhesive composition and its use, and an article.

### TECHNICAL BACKGROUND

Hot melt compositions (HM compositions) are substances which are solid at room temperature, and which generally comprise neither water nor solvent. They are typically used as adhesives.

Among these HM compositions, hot melt pressure sensitive adhesives (HMPSA) are substances conferring an immediate tacky property (also called "tack") to a substrate coated with such adhesive which allows its instantaneous adhesion to another substrate under a slight and brief pressure, at room temperature (e.g. between 18°C and 25°C).

HM adhesives are generally applied in the molten state after heating to a temperature most often comprised between 130°C and 180°C, and solidify during cooling. HM adhesives not being HMPSA thus form a seal (or adhesive joint) after cooling which ensures the attachment of the substrates to be assembled, whereas HMPSA bond substrates under a slight and brief pressure at room temperature.

HM adhesives are widely used in various applications, in particular in tapes and labels, packaging and hygiene products, such as disposable absorbent articles.

However, conventional HMPSA are formulated to provide strong adhesion to a specific substrate, but not a variety of different substrates. In particular, modal is considered difficult to adhere.

Therefore, the present invention aims at providing a HMPSA composition having a good peel strength on different substrates, in particular plastics (e.g. polyethylene, polypropylene), cotton and modal.

It has now been found that this aim can be achieved by the HMPSA composition described below.

### SUMMARY OF THE INVENTION

The invention relates to a hot melt pressure sensitive adhesive composition comprising:
- at least one styrene block copolymer,
- at least one tackifying resin, and
- a plasticizer comprising at least one alkylated naphthalene.

Furthermore, the invention relates to an article comprising at least one surface coated with the hot melt pressure sensitive adhesive composition according to the invention.

Finally, the invention relates to the use of the hot melt pressure sensitive adhesive composition according to the invention as an adhesive for bonding two substrates together, or as a coating on the surface of a substrate.

The present invention makes it possible to address the need mentioned above. In particular, the HMPSA composition according to the invention surprisingly has an improved peel strength on modal while maintaining a good (or even improved) peel strength on cotton, especially compared to compositions devoid of the claimed alkylated naphthalene.

### DESCRIPTION OF THE INVENTION

### Hot melt pressure sensitive adhesive composition

The term "hot melt" is used herein to describe that the adhesive composition is solid at ambient temperature (e.g. 18°C to 25°C) and requires to be heated to melt and then be applied on a substrate. The HMPSA composition according to the invention is generally in a molten state at a temperature of at least 115°C, preferably at least 130°C.

In the present text, "HMPSA" means "hot melt pressure sensitive adhesive".

### Styrene block copolymer

By "styrene block copolymer", it is intended a block copolymer comprising at least one polystyrene block. Preferably, the styrene block copolymer comprises at least one non elastomeric block A being a polystyrene block and at least one elastomeric block B being a totally or partially hydrogenated or a non-hydrogenated diene polymer block. It is understood that the elastomeric block B may comprise different diene polymers, for example ethylene and butylene (for example, styrene-ethylene-butylene-styrene copolymer is a A-B-A triblock copolymer).

The styrene block copolymer may be a linear or radial block copolymer, for example a linear A-B diblock copolymer, a linear A-B-A triblock copolymer or a radial (A-B)ₙY copolymer, wherein A and B are as defined above, n having an average value of more than 2, generally comprised between 3 and 10, and Y is the residue of a multifunctional coupling agent used in the production of the radial copolymer. There is no particular limitation on the types of the coupling agent which may be used, and examples include silane compounds (such as halogenated silane or alkoxysilane, in particular trichlorosilane, tribromosilane, tetrachlorosilane, tetrabromosilane, methyltrimethoxysilane, ethyltrimethoxysilane, vinyltrimethoxysilane, vinyltriethoxysilane, tetramethoxysilane, tetraethoxysilane), tin compounds (such as halogenated tin, in particular tetrachlorotin), epoxy compounds (such as a epoxysilane or epoxydized soybean oil), an acrylic esters (such as pentaerythritol tetraacrylate), divinyl compounds (such as divinylbenzene), etc.

Advantageously, the at least one styrene block copolymer is selected from linear styrene-butadiene copolymer, radial styrene-butadiene copolymer, linear styrene-isoprene copolymer, radial styrene-isoprene copolymer, linear styrene-ethylene-butylene copolymer, radial styrene-ethylene-butylene copolymer, linear styrene-ethylene-propylene copolymer, radial styrene-ethylene-propylene copolymer, linear styrene-butadiene-styrene copolymer, linear styrene-isoprene-styrene copolymer, linear styrene-ethylene-butylene-styrene copolymer, linear styrene-butadiene-butylene-styrene copolymer, linear styrene-ethylene-propylene-styrene copolymer, linear styrene-ethylene-ethylene-propylene-styrene copolymer, linear styrene-isoprene-butadiene-styrene copolymer, and mixtures thereof.

Preferably, the at least one styrene block copolymer is selected from linear styrene-butadiene copolymer, radial styrene-butadiene copolymer, linear styrene-isoprene copolymer, radial styrene-isoprene copolymer, linear styrene-butadiene-styrene copolymer, linear styrene-isoprene-styrene copolymer, and mixtures thereof.

The linear triblock copolymers and radial block copolymers may be obtained using processes known per se and are commercially available. The processes for obtaining these commercial products may result in the formation of variable amounts of diblock compounds of formula A-B. Thus, when the at least one styrene block copolymer comprises a linear triblock or radial copolymer (in particular as described above), it may further comprise between 0 % and 90 % by weight of diblock compounds, with respect to the total weight of styrene block copolymer(s).

According to an embodiment, the at least one styrene block copolymer comprises a linear styrene-butadiene copolymer and/or a linear styrene-butadiene-styrene copolymer, preferably a linear styrene-butadiene copolymer and a linear styrene-butadiene-styrene copolymer. For example, the total content of linear styrene-butadiene and linear styrene-butadiene-styrene copolymers may be comprised between 20 % by weight and 100 % by weight, preferably between 30 % by weight and 100 % by weight, with respect to the total weight of the at least one styrene block copolymer. It is understood that the at least one styrene block copolymer may further comprise one or more styrene block copolymers selected from the other styrene block copolymers disclosed hereinbefore, including preferred features (when the total content of linear styrene-butadiene and linear styrene-butadiene-styrene copolymers is less than 100 % by weight with respect to the total weight of the at least one styrene block copolymer).

The at least one styrene block copolymer may have a styrene content comprised between 10 % and 50 % by weight with respect to the total weight of the copolymer. The styrene content is the weight percentage of styrene moieties (present in the polystyrene block(s)) with respect to the total weight of the copolymer.

In the context of the invention, the ranges of values are understood to be inclusive. For example, the range "between 10 % and 50 %" includes, in particular, the values 10 % and 50 %.

The at least one styrene block copolymer may have a number average molecular weight (Mn) comprised between 50000 g/mol and 500000 g/mol. The number average molecular weight can be measured by size exclusion chromatography, preferably with a polystyrene calibration.

The total content of the at least one styrene block copolymer in the HMPSA composition according to the invention may be comprised between 5 % and 50 % by weight with respect to the total weight of said composition, preferably between 10 % and 40 % by weight, more preferably between 15 % and 30 % by weight.

### Tackifying resin

The at least one tackifying resin may be selected from:
- natural and modified rosin, such as gum rosin, wood rosin, tall-oil rosin, distilled rosin, hydrogenated rosin, dimerized rosin, polymerized rosin,
- esters of natural and modified rosins, in particular glycerol and pentaerythritol esters, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin, the petroleum C5/C9-hydrocarbon resin or the DCPD resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin, mention may be made of vinyltoluene, indene, methylstyrene, α-methylstyrene, styrene and/or methylindene.

Preferably, the at least one tackifying resin is selected from:
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers (optionally in mixture with aromatic C9-hydrocarbon monomers and/or aliphatic C5-hydrocarbon monomers),
- their corresponding hydrogenated derivatives (resulting from a subsequent total or partial hydrogenation thereof), and
- mixtures thereof.

According to an embodiment, the at least one tackifying resin is hydrogenated (totally or partially).

The tackifying resin may have a softening point of at least 90°C, preferably comprised between 90°C and 140°C. The softening point may be measured by a ring and ball method, for example according to ASTM E28-18.

The total content of the at least one tackifying resin in the HMPSA composition according to the invention may be comprised between 20 % and 80 % by weight with respect to the total weight of said composition, preferably between 30 % and 70 % by weight, more preferably between 40 % and 65 % by weight.

### Plasticizer

The plasticizer comprises at least one alkylated naphthalene.

Alkylated naphthalenes can be defined as compounds comprising (preferably consisting of) a naphthalene core substituted with one or more alkyl groups (linear or branched), preferably with 1 to 6 alkyl groups, more preferably with 1 to 4 alkyl groups, for example 1 to 2 alkyl groups.

Each alkyl group in the alkylated naphthalene may independently comprise 1 to 30 carbon atoms, preferably 3 to 20 carbon atoms, more preferably 5 to 18 carbon atoms, even more preferably 10 to 16 carbon atoms, e.g., 3, 4, 5, 6, 7, 8, 9, 10, 11, 12, 13, 14, 15, 16, 17, 18, 19, 20 carbon atoms.

The plasticizer may comprise a mixture of alkylated naphthalenes differing by their number of alkyl groups and/or the structure of their alkyl groups (e.g. number of carbon atoms and/or isomers). For example, the plasticizer can comprise a mixture of mono- and di-(sec-hexadecyl)naphthalene.

The kinematic viscosity at 40°C of the alkylated naphthalene may be comprised between 1 mm²/s and 250 mm²/s, preferably between 1 mm²/s and 200 mm²/s, more preferably between 5 mm²/s and 150 mm²/s, e.g., 5, 10, 15, 20, 25, 30, 35, 40, 45, 50, 55, 60, 65, 70, 75, 80, 85, 90, 95, 100, 105, 110, 115, 120, 125, 130, 135, 140, 145, 150 mm²/s. The kinematic viscosity may be measured according to ASTM D445.

Unless otherwise stated, standards mentioned throughout the present application are those in effect on the date the application is filed.

The surface tension at 23°C of the alkylated naphthalene may be at least 25 mN/m, preferably at least 31 mN/m, e.g., between 25 and 45 mN/m. The surface tension may be measured according to GB/T 22237-2008.

Alkylated naphthalenes are commercially available, for example under the tradename Synesstic^{™} (by ExxonMobil), SynNaph^{®} AN (by NACO) or DowSyn^{®} AN (by DowPol).

The plasticizer may further comprise an additional plasticizer (other than an alkylated naphthalene), for example selected from naphthenic oils, paraffinic oils, olefin oligomers, and mixtures thereof, in particular naphthenic oils.

Naphthenic and paraffinic oils are petroleum based oils which consists in a mixture of naphthenic hydrocarbons (e.g. aliphatic, saturated or unsaturated, C4 to C7-member hydrocarbon rings, preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic; preferably aromatic C6-member hydrocarbon rings).

The classification of naphthenic and paraffinic oil is made based on the amount of each type of hydrocarbons in the oil. Typically, paraffinic oils have a paraffinic hydrocarbon content of at least 50% by weight with respect to the total weight of the paraffinic oil, and naphthenic oils have a naphthenic hydrocarbon content between 30% and 40% by weight, with respect to the total weight of the naphthenic oil.

By "olefin oligomers", it is intended polyolefins having a low weight average molecular weight, preferably between about 100 and about 10000 g/mol. The weight average molecular weight can be measured by size exclusion chromatography, preferably with a polystyrene calibration.

In the present text, by "about X", it is intended more or less 10% the value of X.

As examples of olefin oligomers, mention may be made of polypropylene, polybutene, hydrogenated polyisopropene and hydrogenated polybutadiene.

Advantageously, the plasticizer comprises at least 50 % by weight of the at least one alkylated naphthalene, preferably at least 70 % by weight, for example between 75 % and 100 % by weight, based on the total weight of the plasticizer.

The plasticizer content may be comprised between 10 % and 40 % by weight, preferably between 15 % and 30 % by weight, based on the total weight of the HMPSA composition according to the invention.

### Additives

The HMPSA composition according to the invention may further comprise one or more additives which may be selected from additional polymers other than styrenic block copolymers, ultraviolet (UV) stabilizers (or antioxidants), waxes, fillers, pigments, ultraviolet or infrared fluorescent agents, and mixtures thereof.

Advantageously, the HMPSA composition according to the invention comprises one or more additives selected from UV stabilizers (or antioxidants).

The total content of additives in the HMPSA composition according to the invention may be up to 20 wt% based on the total weight of the HMPSA composition, preferably from 0.2 wt% to 2 wt%.

Examples of additional polymers other than styrenic block copolymers are polyolefins, amorphous poly-alpha-olefins, ethyl-vinyl-acetate polymers (EVA) and polyamides.

The weight average molecular weight (Mw) of said additional polymers may be comprised between 12000 g/mol and 100000 g/mol, preferably between 30000 and 80000 g/mol. Mw can be measured by size exclusion chromatography, preferably with a polystyrene calibration.

The total content of said additional polymers may be up to 5 % by weight with respect to the total weight of the HMPSA composition according to the invention.

Advantageously, the HMPSA composition according to the invention comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles (such as 2-(2'-hydroxy-5'-methylphenyl)-5-benzotriazole), benzophenones, hindered amines (also named HALS for "hindered amine light stabilizers"), hindered phenols and multifunction phenols, such as sulfur and phosphorous-containing phenols. Preferably, the UV stabilizer is selected from benzotriazoles, hindered phenols, multifunction phenols and mixtures thereof.

Representative hindered amines include bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) and/or 4,4'-bis(α,α-dimethylbenzyl)diphenylamine.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

The total UV stabilizer (or antioxidant) content may be comprised between 0.2 % and 2 wt% based on the total weight of the HMPSA composition according to the invention.

Examples of waxes are paraffin waxes, Fischer-Tropsch waxes and EVA waxes.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("AET").

By "EVA wax", it is intended oligomeric polymer compounds that are prepared via a process comprising the co-polymerization of ethylene monomers and vinyl acetate monomers and that have the following properties: (a) solid at room temperature; (b) low melting point; and (c) insoluble in water. The EVA copolymers of the EVA wax may be functionalized or modified in any possible manner.

The wax content may be up to 10 % by weight with respect to the total weight of the HMPSA composition according to the invention, preferably up to 5 % by weight.

Typical fillers include talc, calcium carbonate, clay, silica, mica, wollastonite, feldspar, aluminum silicate, alumina, hydrated alumina, glass microspheres, ceramic microspheres and/or thermoplastic microspheres.

The filler content may be up to 10 % by weight with respect to the total weight of the HMPSA composition according to the invention, preferably up to 5 % by weight.

The pigment may be an organic and/or inorganic pigment, for example titanium dioxide.

The pigment content may be up to 5 % by weight with respect to the total weight of the HMPSA composition according to the invention, preferably up to 3 % by weight.

Examples of ultraviolet or infrared fluorescent agents are 2-(6-hydroxy-3-oxo-(3H)-xanthen-9-yl) benzoic acid, disodium 6-hydroxy-3-oxo-9-xanthene-o-benzoate and 8-hydroxy-1,3,6-pyrenetrisulfonic acid trisodium salt.

The content of ultraviolet or infrared fluorescent agent may be up to 3 % by weight with respect to the total weight of the HMPSA composition according to the invention, preferably up to 1 % by weight.

### Other features of the HMPSA composition

According to an embodiment, the HMPSA composition according to the invention comprises:
- between 5 % and 50 % by weight of at least one styrene block copolymer,
- between 20 % and 80 % by weight of at least one tackifying resin,
- between 10 % and 40 % by weight of a plasticizer comprising at least one alkylated naphthalene preferably having a kinematic viscosity at 40°C comprised between 1 mm²/s and 250 mm²/s, the plasticizer preferably comprising at least 50 % by weight of the at least one alkylated naphthalene, and
- optionally up to 20 % by weight of one or more additives,
the weight percentages being with respect to the total weight of said composition unless otherwise stated.

Preferably, the HMPSA composition according to the invention consists essentially of the ingredients mentioned above. By "consisting essentially", it is intended that said composition comprises less than 5 % by weight of ingredients other than the aforementioned ingredients, relative to the total weight of said composition, preferably less than 2% by weight, even more preferably less than 1% by weight.

The ingredients of this embodiment and their particular contents are as described above, including the embodiments and preferred features.

In particular, the HMPSA composition according to the invention comprises:
- between 15 % and 30 % by weight of at least one styrene block copolymer, preferably selected from linear styrene-butadiene copolymer, radial styrene-butadiene copolymer, linear styrene-isoprene copolymer, radial styrene-isoprene copolymer, linear styrene-butadiene-styrene copolymer, linear styrene-isoprene-styrene copolymer, and mixtures thereof,
- between 40 % and 65 % by weight of at least one tackifying resin, preferably selected from aliphatic petroleum C5-hydrocarbon resins, aromatic petroleum C9-hydrocarbon resins, petroleum C5/C9-hydrocarbon resins, DCPD petroleum resins, hydrogenated derivatives thereof, and mixtures thereof,
- between 15 % and 30 % by weight of a plasticizer comprising at least one alkylated naphthalene preferably having a kinematic viscosity at 40°C comprised between 1 mm²/s and 250 mm²/s, the plasticizer preferably comprising between 75 % and 100 % by weight of the at least one alkylated naphthalene, and
- optionally between 0.2 % and 2 % by weight of one or more additives, preferably selected from UV stabilizers (or antioxidants),
the weight percentages being with respect to the total weight of said composition unless otherwise stated.

Preferably, the HMPSA composition according to the invention consists essentially of the ingredients mentioned above.

The ingredients of this embodiment and their particular contents are as described above, including the embodiments and preferred features.

The softening point of the HMPSA composition according to the invention may vary between 60°C and 130°C, preferably between 60°C and 110°C. The softening point can be measured by a ring and ball method, for example according to ASTM E28-18.

The melt viscosity at 160°C of the HMPSA composition according to the invention may vary between 1000 and 10000 mPa.s, preferably between 1500 and 8000 mPa.s. The melt viscosity may be measured according to ASTM D3236-15, with a Brookfield viscometer.

Advantageously, the HMPSA composition according to the invention has an improved peel strength on modal, in particular compared to a composition devoid of alkylated naphthalene. The peel strength may be measured for a modal/polyethylene laminated specimen, for example as described in Example 1. Said peel strength is preferably of at least 1.1 N/20 mm, more preferably at least 1.5 N/20 mm.

The HMPSA composition according to the invention can be prepared by mixing its ingredients under heat, preferably at a temperature ranging from 140°C to 180°C and atmospheric pressure. An example of preparation is described in the example part below.

### Article

The invention further relates to an article comprising the HMPSA composition according to the invention, wherein the article comprises at least one surface coated with the HMPSA composition according to the invention.

The at least one coated surface may be a textile (woven or nonwoven), an absorbent fluff, a super absorbent polymer (SAP), a composite material and/or a plastic which may be elastomeric or non-elastomeric (such as styrene block copolymer(s), polyurethane(s) and/or polyolefin(s)).

Preferably, the at least one coated surface is a textile, preferably comprising polypropylene, polyethylene, polyethylene terephthalate, cotton, bamboo, modal, silk and/or polylactic acid.

According to a preferred embodiment, the HMPSA composition according to the invention bonds at least two substrates of the article according to the invention (preferably, an assembly product). The at least two substrates may be joined adhesively by a layer of the composition according to the invention, in sandwich between the two substrates, and/or by spots of the composition according to the invention. Preferably, at least one substrate is cotton and/or modal, in particular modal; the other substrate may be a plastic, in particular a polyolefin (e.g. polypropylene, polyethylene).

The article may be a disposable diaper, disposable training pants, a disposable adult incontinent pad or brief, or a disposable feminine sanitary napkin or pad.

### Use of the hot melt pressure sensitive adhesive composition

The invention also relates to the use of the HMPSA composition according to the invention as an adhesive for bonding two substrates together, or as a coating on the surface of a substrate.

The substrates to be bonded may be different or of same nature, with various forms. Preferably, the substrates are each a layer (or film), strands or fluff.

Preferably, each substrate may be selected independently from one another among textile (woven or nonwoven), absorbent fluff, super absorbent polymer (SAP), composite material, plastic which may be elastomeric or non-elastomeric (such as styrene block copolymer(s), polyurethane(s) and/or polyolefin(s)), and any mixture thereof.

According to a preferred embodiment, at least one of the substrates to be bonded is a textile, in particular modal. Preferably, the other substrate is a plastic, in particular a polyolefin (e.g. polypropylene, polyethylene).

The surface to be coated may be a textile (woven or nonwoven), an absorbent fluff, a super absorbent polymer (SAP), a composite material and/or a plastic which may be elastomeric or non-elastomeric (such as styrene block copolymer(s), polyurethane(s) and/or polyolefin(s)).

Preferably, the surface is a textile, in particular modal, preferably of a part of an article selected from disposable diapers, disposable training pants, disposable adult incontinent pads or briefs and disposable feminine sanitary napkins or pads.

All the embodiments described above can be combined with each other. In particular, the various aforementioned ingredients in the composition, and in particular the preferred embodiments, can be combined with each other.

The following examples illustrate the invention without limiting it.

### EXAMPLES

### Example 1: Materials and methods

### Materials

The following materials were implemented:
- AO1010: Irganox^{®} 1010 (by BASF), which is pentaerythritol tetrakis[3-(3,5-di-tert-butyl-4-hydroxyphenyl)propionate] (CAS: 6683-19-8), UV stabilizer;
- AO168: EVERFOS^{®} 168 (by EVERSPRING), which is tris(2,4-di-tert-butylphenyl) phosphite (CAS: 31570-04-4), UV stabilizer;
- UVP: RIASORB UV-P (by Rianlon), which is 2-(2'-hydroxy-5'-methylphenyl)-5-benzotriazole (CAS: 2440-22-4), UV stabilizer;
- N4010 (by PetroChina Karamay Petrochemical Company): naphthenic oil (CAS: 64742-52-5) having a kinematic viscosity at 40°C of about 165 mm²/s and surface tension at 23°C of 32.6 mN/m, plasticizer;
- Nyflex^{®} 222B (by Nynas): naphthenic oil (CAS: 64742-52-5) having a kinematic viscosity at 40°C of about 100 mm²/s and surface tension at 23°C of 32.8 mN/m, plasticizer;
- SpectraSyn^{™} 6 (by ExxonMobil): poly(alpha-olefin) synthetic oil having a kinematic viscosity at 40°C of about 31 mm²/s and surface tension at 23°C of 30.6 mN/m, plasticizer;
- LV-50 (by ENEOS): polybutene (CAS: 9003-29-6) having a kinematic viscosity at 40°C of about 110 mm²/s and surface tension at 23°C of 29.2 mN/m, plasticizer;
- Synesstic^{™} 5 (by ExxonMobil): alkylated naphthalene having a kinematic viscosity at 40°C of about 29 mm²/s and surface tension at 23°C of 33.4 mN/m, plasticizer;
- Synesstic^{™} 12 (by ExxonMobil): alkylated naphthalene having a kinematic viscosity at 40°C of about 109 mm²/s and surface tension at 23°C of 32.4 mN/m, plasticizer;
- SynNaph^{®} AN5 (by NACO): alkylated naphthalene (a naphthalene core substituted with one alkyl group having 12 to 16 carbon atoms) having a kinematic viscosity at 40°C of about 27 mm²/s and surface tension at 23°C of 33.8 mN/m, plasticizer;
- SynNaph^{®} AN15 (by NACO): alkylated naphthalene (a naphthalene core substituted with more than one alkyl group having 12 to 16 carbon atoms) having a kinematic viscosity at 40°C of about 140 mm²/s and surface tension at 23°C of 32.4 mN/m, plasticizer;
- YH-4019 (by Sinopec): radial styrene-isoprene block copolymer having a styrene content of about 19% by weight and a diblock content of about 30% by weight, the percentages being with respect to the total weight of the copolymer;
- JH-8291 (by Ningbo Jinhai Chenguang Chemical Corporation): linear styrene-isoprene-styrene block copolymer having a styrene content of about 29% by weight and a diblock content of 0% by weight, the percentages being with respect to the total weight of the copolymer;
- JH-8161 (by Ningbo Jinhai Chenguang Chemical Corporation): linear styrene-isoprene-styrene block copolymer having a styrene content of about 16% by weight and a diblock content of about 50% by weight, the percentages being with respect to the total weight of the copolymer;
- GLOBALPRENE 3522 (by LCY): linear styrene-butadiene-styrene block copolymer having a styrene content of about 23% by weight and a diblock content of about 78% by weight, the percentages being with respect to the total weight of the copolymer;
- TAIPOLO 4270 (by TSRC CORPORATION): linear styrene-butadiene-styrene block copolymer having a styrene content of about 37% by weight and a diblock content of about 70% by weight, the percentages being with respect to the total weight of the copolymer;
- JH-6130 (by Ningbo Jinhai Chenguang Chemical Corporation): hydrogenated cycloaliphatic hydrocarbon resin having a softening point between 126°C and 135°C, tackifying resin;
- HM-1000 (by Henghe Materials & Science Technology Co., Ltd.): C9 hydrogenated hydrocarbon resin (CAS: 68132-00-3) having a softening point between 95°C and 105°C, tackifying resin.

### Methods

The Ring and Ball softening point (SP) of each composition was measured according to the standard ASTM E28-18, in glycerol with an automated Herzog unit.

The viscosity of each composition was measured at 160°C according to the standard ASTM D3236-15, with a Brookfield viscometer.

For measuring the peel strengths, laminated specimens were prepared through a continuous coating process by using a laboratory coater (Shanghai Huadi Machinery Co., LTD), at 100 meter per minute. Specifically, the composition to be tested was first heated at about 160°C and was then applied to a release film (glassine paper) at 30 g/m² using a slot nozzle (open times typically from 0.05 to 1 s, and nip rolls compression from 10 kPa to 4 MPa). The release film coated with the composition and a polyethylene (PE) film were laid one upon another through the composition to obtain a laminate. After production, the laminate was packaged by being wound up. The laminate was then stored at room temperature (about 23°C) overnight to cool and solidify the composition.

The laminate was then cut in order to obtain test specimens having a width of 20 mm and a length of 150 mm. The peel strength was measured after peeling off the release film, contacting the visible composition (still attached to the PE film) with cotton or modal fabric, and rolling the assembly by a 2kg weight back and force once. The 180° peel test was performed with a tensile machine (Electrochemical Universal Testing Machine, Model CMT2102) by pulling apart the specimen at a rate of 300 mm/min at 23°C. Five samples were tested and then averaged and recorded.

### Example 2: Preparation and properties of HMPSA compositions

Compositions C1-C3 (comparative compositions) and 1-7 (according to the invention) were prepared by mixing the ingredients indicated in Table 1 below (the percentages being weight percentages with respect to the total weight of the composition): all the ingredients except the tackifying resins (JH-6130 and HM-1000) were added into a reactor. The reactor was heated to 160°C at atmospheric pressure, and stirring was performed for 1 to 2 hours. The tackifying resins were then added and stirring was performed for 1 h to obtain the compositions.

| **Composition** | **C1** | **C2** | **C3** | **1** | **2** | **3** | **4** | **5** | **6** | **7** |
|---|---|---|---|---|---|---|---|---|---|---|
| AO1010 | 0.5 | 0.5 | 0.5 | 0.5 | 0.5 | 0.5 | 0.5 | 0.5 | 0.5 | 0.5 |
| AO168 | 0.2 | 0.2 | 0.2 | 0.2 | 0.2 | 0.2 | 0.2 | 0.2 | 0.2 | 0.2 |
| UVP | 0.3 | 0.3 | 0.3 | 0.3 | 0.3 | 0.3 | 0.3 | 0.3 | 0.3 | 0.3 |
| N4010 | | | | | 5 | | | | | |
| Nyflex^{®} 222B | 26 | | | | | | | | | |
| SpectraSyn^{™} 6 | | 19 | | | | | | | | |
| LV-50 | | | 25 | | | | | | | |
| Synesstic^{™} 5 | | | | 19 | 15 | 18 | 18 | | | |
| Synesstic^{™} 12 | | | | | | | | | | 22 |
| SynNaph^{®} AN5 | | | | | | | | | 19 | |
| SynNaph^{®} AN15 | | | | | | | | 22 | | |
| YH-4019 | 6 | 6 | 6 | 6 | 6 | | 6 | 6 | 6 | 6 |
| JH-8291 | 10 | 10 | 10 | 10 | 10 | | 10 | 10 | 10 | 10 |
| JH-8161 | 6 | 6 | 6 | 6 | 6 | | | 6 | 6 | 6 |
| GLOBALPRENE 3522 | | | | | | 14 | 8 | | | |
| TAIPOLO 4270 | | | | | | 10 | | | | |
| JH-6130 | 10 | 15 | 10 | 15 | 10 | 20 | 20 | 15 | 15 | 15 |
| HM-1000 | 41 | 43 | 42 | 43 | 47 | 37 | 37 | 40 | 43 | 40 |

| | | | | | | | | | | |
|---|---|---|---|---|---|---|---|---|---|---|
| Table 1: Ingredients of compositions C1-C3 and 1-7 | | | | | | | | | | |

Their properties were then evaluated as described in Example 1 and the results are indicated in Table 2.

| **Composition** | **C1** | **C2** | **C3** | **1** | **2** | **3** | **4** | **5** | **6** | **7** |
|---|---|---|---|---|---|---|---|---|---|---|
| SP (°C) | 84.2 | 90.2 | 84.3 | 67.7 | 70.1 | 68.7 | 69.4 | 86.4 | 68.2 | 84.1 |
| Viscosity (mPa.s) | 1960 | 2080 | 1680 | 2015 | 1895 | 2950 | 2550 | 2300 | 2325 | 2200 |
| Peel strength cotton (N/20 mm) | 2.39 | 2.21 | 2.41 | 2.58 | 3.04 | 4.40 | 3.27 | 2.90 | 2.99 | 3.14 |
| Peel strength modal (N/20 mm) | 0.73 | 0.47 | 0.68 | 1.80 | 1.86 | 3.38 | 2.12 | 1.55 | 1.85 | 1.67 |

| | | | | | | | | | | |
|---|---|---|---|---|---|---|---|---|---|---|
| Table 2: Properties of compositions C1-C3 and 1-7 | | | | | | | | | | |

Compositions 1-7 according to the invention have a good peel strength both on cotton and modal. On the contrary, if comparative compositions C1-C3 have a good peel strength on cotton, they have a low peel strength on modal.

In particular, compared to other plasticizers, the use of alkylated naphthalene makes it possible to significantly increase the peel strength on modal while increasing the peel strength on cotton.

## Claims

1. Hot melt pressure sensitive adhesive composition comprising:
- at least one styrene block copolymer,
- at least one tackifying resin, and
- a plasticizer comprising at least one alkylated naphthalene.

2. The hot melt pressure sensitive adhesive composition according to claim 1, wherein the at least one styrene block copolymer is selected from linear styrene-butadiene copolymer, radial styrene-butadiene copolymer, linear styrene-isoprene copolymer, radial styrene-isoprene copolymer, linear styrene-ethylene-butylene copolymer, radial styrene-ethylene-butylene copolymer, linear styrene-ethylene-propylene copolymer, radial styrene-ethylene-propylene copolymer, linear styrene-butadiene-styrene copolymer, linear styrene-isoprene-styrene copolymer, linear styrene-ethylene-butylene-styrene copolymer, linear styrene-butadiene-butylene-styrene copolymer, linear styrene-ethylene-propylene-styrene copolymer, linear styrene-ethylene-ethylene-propylene-styrene copolymer, linear styrene-isoprene-butadiene-styrene copolymer, and mixtures thereof.

3. The hot melt pressure sensitive adhesive composition according to claim 1 or 2, wherein the at least one styrene block copolymer comprises a linear styrene-butadiene copolymer and/or a linear styrene-butadiene-styrene copolymer, preferably a linear styrene-butadiene copolymer and a linear styrene-butadiene-styrene copolymer.

4. The hot melt pressure sensitive adhesive composition according to any one of claims 1 to 3, wherein the total content of the at least one styrene block copolymer is comprised between 5 % and 50 % by weight with respect to the total weight of the composition, preferably between 10 % and 40 % by weight, more preferably between 15 % and 30 % by weight.

5. The hot melt pressure sensitive adhesive composition according to any one of claims 1 to 4, wherein the at least one tackifying resin is selected from:
- natural and modified rosin, such as gum rosin, wood rosin, tall-oil rosin, distilled rosin, hydrogenated rosin, dimerized rosin, polymerized rosin,
- esters of natural and modified rosins, in particular glycerol and pentaerythritol esters, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts,
- copolymers of terpene with a diene monomer, preferably an aromatic diene monomer such as a styrene monomer,
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives resulting from a subsequent total or partial hydrogenation thereof, and
- mixtures thereof.

6. The hot melt pressure sensitive adhesive composition according to any one of claims 1 to 5, wherein the total content of the at least one tackifying resin is comprised between 20 % and 80 % by weight with respect to the total weight of the composition, preferably between 30 % and 70 % by weight, more preferably between 40 % and 65 % by weight.

7. The hot melt pressure sensitive adhesive composition according to any one of claims 1 to 6, wherein the alkylated naphthalene comprises a naphthalene core substituted with one or more alkyl groups, preferably with 1 to 6 alkyl groups, more preferably with 1 to 4 alkyl groups.

8. The hot melt pressure sensitive adhesive composition according to claim 7, wherein each alkyl group in the alkylated naphthalene independently comprises 1 to 30 carbon atoms, preferably 3 to 20 carbon atoms, more preferably 5 to 18 carbon atoms, even more preferably 10 to 16 carbon atoms.

9. The hot melt pressure sensitive adhesive composition according to any one of claims 1 to 8, wherein the kinematic viscosity at 40°C of the alkylated naphthalene is comprised between 1 mm²/s and 250 mm²/s, preferably between 1 mm²/s and 200 mm²/s, more preferably between 5 mm²/s and 150 mm²/s.

10. The hot melt pressure sensitive adhesive composition according to any one of claims 1 to 9, wherein the surface tension at 23°C of the alkylated naphthalene is at least 25 mN/m, preferably at least 31 mN/m.

11. The hot melt pressure sensitive adhesive composition according to any one of claims 1 to 10, wherein the plasticizer comprises at least 50 % by weight of the at least one alkylated naphthalene, preferably at least 70 % by weight, for example between 75 % and 100 % by weight, based on the total weight of the plasticizer.

12. The hot melt pressure sensitive adhesive composition according to any one of claims 1 to 11, wherein the plasticizer content is comprised between 10 % and 40 % by weight, preferably between 15 % and 30 % by weight, based on the total weight of the composition.

13. The hot melt pressure sensitive adhesive composition according to any one of claims 1 to 12, further comprising one or more additives which may be selected from additional polymers other than styrenic block copolymers, ultraviolet stabilizers or antioxidants, waxes, fillers, pigments, ultraviolet or infrared fluorescent agents, and mixtures thereof.

14. Article comprising the hot melt pressure sensitive adhesive composition according to any one of claims 1 to 13, wherein the article comprises at least one surface coated with said composition.

15. Use of the hot melt pressure sensitive adhesive composition according to any one of claims 1 to 13 as an adhesive for bonding two substrates together, or as a coating on the surface of a substrate.
